# EUROPEAN PATENT SPECIFICATION

(11) **EP 2 981 175 B1**
(45) Date of publication and mention of the grant of the patent: **20.02.2019**
(21) Application number: 14712731.0
(22) Date of filing: 19.03.2014
(51) Int. Cl.: A23G 1/32, A23G 3/36, A23L 27/40

(54) **FOOD PRODUCTS COMPRISING A CALCIUM SALT**
LEBENSMITTEL UMFASSEND KALZIUM SALZ
PRODUITS ALIMENTAIRES COMPRENANT UN SEL DE CALCIUM

(30) Priority: 22.03.2013 GB 201305287
(43) Date of publication of application: 10.02.2016
(73) Proprietor: Mondelez UK R&D Limited, West Midlands B30 2LU (GB)
(72) Inventor: ELLEMAN, Carole Jean, Reading Berkshire RG6 6LA (GB)
(74) Representative: Appleyard Lees IP LLP
(86) International application number: PCT/GB2014/050867
(87) International publication number: WO 2014/147400

(56) References cited:
- EP-A1- 0 125 021
- EP-A1- 0 800 770
- EP-A2- 1 260 147
- WO-A1-99/47122
- WO-A1-2012/066389
- WO-A1-2012/140293
- JP-A- 2000 050 833
- US-A1- 2005 123 670
- US-A1- 2007 042 082
- US-A1- 2007 160 713
- US-A1- 2007 269 558
- Lily Hong-Shum: "Flavour Enhancers", Food additives databook 2nd edition, 5 May 2011 (2011-05-05), pages 455-533, XP055321437, DOI: 10.1002/9781444397741 Retrieved from the Internet: URL:http://onlinelibrary.wiley.com/store/1 0.1002/9781444397741.ch6/asset/ch6.pdf?v=1 &t=ivs7xlzs&s=c05fc372ccc96d2dbdcee71cac79 b25ca652776a [retrieved on 2016-11-21] & Stephanie Doores: "Acidulants" In: "Food additives databook 2nd edition", 5 May 2011 (2011-05-05), Blackwell Publishing Ltd, XP055321436, pages 1-52, DOI: 10.1002/9781444397741,
- Anonymous: "Chocolate - Wikipedia", , 24 February 2013 (2013-02-24), XP055393772, Retrieved from the Internet: URL:https://en.wikipedia.org/w/index.php?t itle=Chocolate&oldid=540127080 [retrieved on 2017-07-25]

## Description

The present invention relates to food products comprising calcium salts, and to methods and uses related thereto.
The present invention relates in particular to confectionery products, for example chocolate products. The invention further relates to enhancing the flavour of confectionery products.
The taste of a food product may be altered by the inclusion of various additive compounds. Such additives may have a particular taste or flavour which is detectable by a consumer of the food product, and/or they may alter the taste perception of other ingredients present in the food product. Additives may also change the texture of a food product. This may or may not be desirable.
The present invention relates in particular to chocolate products. The taste of a chocolate product may depend on the many variables which arise in chocolate production, for example the origin and quality of the cocoa beans and other ingredients used and the processes that transform the cocoa beans in to chocolate products. In particular, the fermentation, roasting and conching processes are important in the development of a desirable taste profile in a chocolate product. Conching involves heating and mechanically working a chocolate mixture over several hours in order to improve the smoothness and taste of the chocolate. The improvement in taste of the chocolate is partially a result of the removal of undesirable flavour compounds during the conching process. Typically, the longer the conching period, the better the taste of the chocolate product. However, conching chocolate for a long time reduces the throughput of a chocolate making process and therefore increases the cost of producing a chocolate product. Using a relatively high temperature when conching, for example above 70 °C, may accelerate the removal of undesirable flavour compounds from the chocolate and therefore shorten the conch time. However such high temperatures may introduce undesirable cooked or burnt flavours.
The taste of a chocolate product may also be altered by inclusion of additive compounds. Additive compounds can be used to import additional flavour and/or to change the perception of the flavour of other compounds present in the chocolate. However some additive compounds have an undesirable texture and may for example impart a powdery feel in the mouth of a consumer WO99/47122 describes a method for preparing a chocolate supplemented with a calcium salt without imparting an after taste to the chocolate. It is an aim of the present invention to provide a food product having an improved taste which overcomes at least one disadvantage of the prior art.
According to a first aspect of the present invention there is provided the use of a calcium salt to improve the flavour profile of a confectionery product wherein the calcium salt has a median particle diameter of less than 30µm, the calcium salt comprises calcium lactate and the confectionery product comprises chocolate; wherein the use enhances the perception of any one or more of the following flavour characteristics: salty, tangy, spicy, herby, gingery, sweet, acidic, rich, cocoa, nutty, bitter, minty, vanilla, earthy, mushroom, umami, sour, fruity, smoky, savoury, caramel, buttery, creamy or malty.
Some people have exceptionally high capability to determine tastes and textures in the mouth. The phrase 'undetectable as particles in the mouth of a consumer' is not meant to refer to such exceptional people but is meant to refer to people with more normal capabilities. For example, 'undetectable as particles in the mouth of a consumer' may mean that in excess of 50% of adult consumers, suitably in excess of 70% of adult consumers, and notably in excess of 85% of adult consumers, will not detect particles when tasting the food product, in a taste test in which they are asked to comment on the organoleptic qualities of the food product, but without being asked specifically about particles.
Suitable confectionery products include: chocolate products, including chocolate in bar form, and chocolates; sugar-confectionery or sugar-replacement or candy products, for example caramel products, toffee products, fudge products, marshmallow products, nougat products, sweets and gums; and flour confectionery products, for example cakes, biscuits, cookies and sweet pastries Suitably the food product is a chocolate product or a caramel, toffee or fudge product. Suitably the food product is a chocolate product.

The calcium salt is calcium lactate Suitably the calcium lactate has a volume-based median particle diameter (d₅₀ where d₅₀ is defined as the diameter where 50% of the total volume of particles has a diameter less than d₅₀; also referred to herein as median particle diameter) of less than 25 µm, for example less than 22 µm, for example less than 20 µm.
Suitably the calcium lactate has a volume-based median particle diameter of at least 5 µm.
Suitably at least 90% by volume of the particles of calcium lactate have a particle diameter less than 30 µm; or less than 25 µm; or less than 22 µm; or less than 20 µm. In other words, the d₉₀ value, where d₉₀ is defined as the diameter where 90% of the total volume of particles has a diameter less than d₉₀, is suitably 30 µm or less; or 25 µm or less; or 22 µm or less; or 20 µm or less.
Suitably at least 90 % by volume of the particles of calcium lactate have a particle diameter of at 5 µm or more.
The particle diameters referred to herein are volume-based particle diameters, where the diameter equals the diameter of a sphere having the same volume as a given particle, and may be determined by using commercially available laser diffraction equipment in the recommended manner; for example the Mastersizer 3000 laser diffraction particle size analyzer available from Malvern Instruments. It will be understood that the particles do not have to be spherical in shape and that the diameter is merely an equivalent diameter. It will also be understood that the apparatus may measure area-based particle diameter with the volume-based particle diameter derived using standard proprietary calculation methods.

Alternatively or additionally, standard mesh sieves may be used to determine suitable particle diameters for use in this invention, for some particle sizes, using standard mesh sieve techniques. For comparison with particle size measurement by laser diffraction, it may be assumed that the particles have a constant density independent of diameter, so that volume-based and weight-based diameters correspond to each other.

Suitably at least 90 % by weight of the particles of calcium lactate would pass through a mesh sieve with 30 µm openings; or through a mesh sieve with 25 µm openings; or through a mesh sieve with 22 µm openings; or through a mesh sieve with 20 µm openings.

Suitably at least 90 % by weight of the particles of calcium lactate would not pass through a mesh sieve with 5 µm openings.

Suitably substantially all of the particles of calcium lactate would pass through a mesh sieve with 30 µm openings; or through a mesh sieve with 25 µm openings; or through a mesh sieve with 22 µm openings; or through a mesh sieve with 20 µm openings.

Suitably less than 5 wt % by weight of the particles of calcium lactate would pass through a mesh sieve with 5 µm openings; less than 1 wt%; and suitably less than 0.1 wt %. Suitably substantially none (e.g. less than 0.01% by weight) of the particles of calcium lactate would pass through a mesh sieve with 5 µm openings.

Suitably the particles of calcium lactate consist essentially of the salt. In some embodiments water of crystallisation may be present. However further components are suitably not incorporated into the particles.

Suitably the particles of calcium lactate are not encapsulated or coated.

The inventors have found that in embodiments of the invention, inclusion of calcium lactate having a particle size as defined herein does not affect the texture of the confectionery product as experienced by the consumer. That is there is no grainy texture perceived as a result of inclusion of particulate material.

Suitably the calcium lactate does not itself have a strong taste but may affect the perception of the taste of other components present in the confectionery product.

The inventors have also found that adding to a confectionery product calcium lactate having a particle diameter as defined herein does can improve the taste of that confectionery product. The calcium lactate may enhance the flavours already present in the confectionery product.

The calcium lactate may enhance any one or more of salty, tangy, spicy, herby, gingery, sweet, acidic, rich, cocoa, nutty, bitter, minty, vanilla, earthy, mushroom, umami, sour, fruity, smoky, savoury, caramel, buttery, creamy or malty flavours; or any combination thereof. Suitably the calcium lactate may enhance the salt flavour in the confectionery product.

The flavour enhancement which may occur in accordance with the invention may mean that smaller quantities of ingredients which are expensive and/or difficult to handle or mix may be used, in comparison with the usage of such ingredients in products which do not contain calcium lactate having a particle diameter as defined herein.

The confectionery product may comprise at least 0.5 g of calcium lactate per 1 kg of confectionery product, suitably at least 1 g of calcium lactate per 1 kg of confectionery product, for example at least 1.5 g of calcium salt per 1 kg of confectionery product.

The confectionery product may comprise up to 10 g of calcium lactate per 1 kg of confectionery product, suitably up to 8 g of calcium lactate per 1 kg of confectionery product, for example up to 6 g of calcium lactate per 1 kg of confectionery product.

The confectionery product may comprise from 0.5 g to 8 g of calcium lactate per 1 kg of confectionery product, suitably from 1 g to 8 g of calcium lactate per 1 kg of confectionery product, for example from 1 g to 6 g of calcium lactate per 1 kg of confectionery product.

In some embodiments the confectionery product of the present invention may be a "reduced salt" food product. Such a product, containing salt, has a similar taste to a comparable conventional confectionery product, but comprises a lower amount of salt, for example more than 20 wt% less salt or more than 30 wt% less salt. The inventors have found that by adding calcium lactate having a median particle diameter of less than 30 µm, for instance with a d₉₀ of 30 µm or less, the salty flavour of the confectionery product is enhanced and therefore less salt needs to be added to the confectionery product in order to obtain a similar taste to the comparable conventional confectionery product.

In some embodiments the confectionery product of the present invention may be a "reduced MSG" food product. Such a product, containing monosodium glutamate (MSG), has a similar taste to a comparable conventional food product, but comprises a lower amount of MSG, for example more than 20 wt% less MSG or more than 30 wt% less MSG. The inventors have found that by adding calcium lactate having a median particle diameter of less than 30 µm, for instance with a d₉₀ of 30 µm or less, the flavour of the confectionery product is further enhanced and therefore less MSG needs to be added to the confectionery product in order to obtain a similar taste to the comparable conventional confectionery product.

The confectionery product comprises chocolate.

The term chocolate in the context of the present invention is not restricted by the various definitions of chocolate provided by government and regulatory bodies.

Suitably the chocolate comprises a cocoa-derived product, a fat and at least one sweetener. Suitable cocoa-derived products include low-fat cocoa solids (also called non-fat cocoa solids of NFCS), cocoa liquor and cocoa butter.

By low-fat or non-fat cocoa solids we mean to refer to the component remaining after removal, or partial removal, of fats from cocoa liquor.

Cocoa butter is both a cocoa-derived product and a fat. In some embodiments the cocoa butter may be the only fat. In these embodiments the chocolate may comprise cocoa butter and at least one sweetener. In some embodiments the chocolate comprising cocoa butter may comprise an additional fat.

In some embodiments the chocolate comprises low-fat cocoa solids, a fat and at least one sweetener. The fat may be a single fat or a combination of more than one fat.

Suitable fats include cocoa butter and cocoa butter alternatives.

Suitable cocoa butter alternatives include, butterfat, a cocoa butter equivalent (CBE), a cocoa butter replacer (CBR), a cocoa butter substitute (CBS), (sometimes used interchangeably with CBR), a vegetable fat that is liquid at standard ambient temperature and pressure (SATP, 25°C and 100kPa) or any combination of the above.

CBEs are defined in Directive 2000/36/EC as complying with the following criteria:
a) they are non-lauric vegetable fats, which are rich in symmetrical monounsaturated triglycerides of the type POP, POSt and StOSt;
b) they are miscible in any proportion with cocoa butter, and are compatible with its physical properties (melting point and crystallisation temperature, melting rate, need for tempering phase);
c) they are obtained only by the processes of refining and/or fractionation, which excludes enzymatic modification of the triglyceride structure.

Suitable CBEs include illipe, Borneo tallow, tengkawang, palm oil, sal, shea, kokum gurgi and mango kernel or synthetic CBEs such as COBERINE (RTM) produced by Loders Croklaan, The Netherlands. CBEs may be used in combination with cocoa butter.

Suitable CBSs (or CBRs) include CBS laurics and CBS non-laurics. CBS laurics are short-chain fatty acid glycerides. Their physical properties vary but they all have triglyceride configurations that make them compatible with cocoa butter. Suitable CBSs include those based on palm kernel oil and coconut oil. CBS non-laurics consist of fractions obtained from hydrogenated oils. The oils are selectively hydrogenated with the formation of trans acids, which increases the solid phase of the fat. Suitable sources for CBS non-laurics include soya, cottonseed, peanut, rapeseed and corn (maize) oil.

Suitable vegetable fats are liquid at standard ambient temperature and pressure (SATP, 25°C and 100kPa). A liquid vegetable fat may be employed when a liquid chocolate composition is desired. Suitable vegetable fats include corn oil, cotton seed oil, rapeseed oil, palm oil, safflower oil, and sunflower oil.

Some or all of the fat is constituted by a partly or wholly non-metabolisable fat, for example Caprenin or Olestra.

"Chocolate" in the context of the present invention includes dark, milk, white, compound chocolate and any other confectionery mass which is solid at ambient temperature and contains fat (e.g. cocoa butter or cocoa butter alternative) and one or more components derived from cocoa beans (e.g. cocoa powder). A sweetener (e.g. sucrose) is typically also contained in the chocolate. Other optional components include milk components (e.g. milk fat and milk powder).

The chocolate may comprise at least 1 wt% low-fat cocoa solids, suitably at least 5 wt%, for example at least 8 wt% low-fat cocoa solids.

The chocolate may comprise up to 30 wt% low-fat cocoa solids, suitably up to 20 wt%, for example up to 15 wt% low-fat cocoa solids.

The chocolate may comprise at least 10 wt% of a fat, suitably at least 20 wt%, for example at least 30 wt% of a fat.

The chocolate may comprise up to 70 wt% of a fat, suitably up to 60 wt%, for example up to 50 wt% of a fat.

The low-fat cocoa solids and fat together may provide at least 20 wt% of the chocolate, suitably at least 30 wt%, for example at least 40 wt%.

The low-fat cocoa solids and fat together may provide up to 90 wt% of the chocolate, suitably up to 80 wt%, for example up to 70 wt%.

Suitably the fat present in the chocolate is cocoa butter.

Suitably the chocolate comprises cocoa liquor. Cocoa liquor comprises low-fat cocoa solids and cocoa butter. The chocolate may comprise cocoa liquor and an additional fat. Suitable additional fats are as described above in relation to the fat. Suitably the chocolate comprises cocoa liquor and additional cocoa butter.

The chocolate may comprise at least one sweetener. The at least one sweetener may be a bulk sweetener or an intense sweetener. Suitable bulk sweeteners include sucrose, invert sugar syrup, caramel, glucose, fructose, polydextrose, high fructose corn syrup, maltodextrin, honey, maple syrup, agave syrup, jam, marmalade, stevia and sugar alcohols, for example glycerol, maltitol, isomalt, sorbitol, xylitol, lactitol, erythritol, galactitol, polyglycitol and mannitol.

The chocolate may comprise at least 1 wt% of a bulk sweetener, suitably at least 10 wt%, for example 20 wt% of a bulk sweetener.

The chocolate may comprise up to 70 wt% of a bulk sweetener, suitably up to 60 wt%, for example up to 55 wt% of a bulk sweetener.

The chocolate may comprise at least one intense sweetener, for example to alter the flavour or reduce the calorie value of the edible material. Suitable intense sweeteners are selected from, for example, aspartame, saccharin, sucralose, acesulfame-K, stevia and neohesperidine. An intense sweetener may be present in an amount of from 0.01 to 2 wt%.

The chocolate may comprise additional ingredients. Suitable additional ingredients include milk products, emulsifiers and flavourings.

Suitable milk products include milk solids and milk fat. Suitable milk solids include skimmed milk powder.

Suitable flavourings for the chocolate include nuts pastes, for example hazelnut paste, fruit flavourings, for example orange essence, mint essence, lemon grass, coriander, cinnamon, chilli, ginger, coffee, and vanillin.

The chocolate product may consist essentially of chocolate or it may comprise further ingredients. In some embodiments the further ingredients may be dispersed within the chocolate. In some embodiments chocolate pieces may be dispersed within the other ingredients. In some embodiments the chocolate may provide a coating around other ingredients. In some embodiments the chocolate may provide a topping or filling. In some embodiments the chocolate may be intimately mixed with other ingredients.

The skilled person will understand the range of such chocolate products that are available. These include, for example, tablets and other shaped items consisting essentially of chocolate; tablets and other shaped items having pieces of fruit, nut, biscuit, toffee, cereals and the like dispersed therein; confectionery or baked items having chocolate pieces dispersed therein; confectionery or baked items partially or fully covered by a chocolate layer or including an internal chocolate layer or filling; and a chocolate tablet or other shaped item mixed with a flavouring agent.

In some embodiments the food product is a chocolate product comprising particles of a calcium salt having particle diameter characteristics as defined herein.

In some embodiments the food product is a chocolate product wherein chocolate thereof comprises particles of a calcium salt having particle diameter characteristics as defined herein, such as having a median particle diameter of less than 100 µm, say less than 60 µm, for instance with a d₉₀ of 100 µm or less.

In some embodiments the food product comprises chocolate wherein the chocolate comprises particles of calcium lactate having particle diameter characteristics as defined herein, such as having a median particle diameter of less than 100 µm, say less than 60 µm, for instance with a d₉₀ of 100 µm or less.

In some embodiments the chocolate may be a dark chocolate. The dark chocolate may comprise at least 30 wt% cocoa-derived products, suitably at least 35 wt%, for example at least 40 wt% cocoa-derived products.

The dark chocolate may comprise up to 99 wt% cocoa solids, suitably up to 90 wt%, for example up to 80 wt% cocoa solids.

Typically dark chocolate comprises cocoa-derived products and a sweetener as major components, in varying amounts which can readily be determined by the skilled person in accord with the type of chocolate being produced, but substantially no dairy-derived components, for example milk solids.

The dark chocolate may comprise cocoa liquor and cocoa butter. Additional low-fat cocoa solids may be present.

In some embodiments the chocolate may be a milk chocolate.

Suitably the milk chocolate comprises cocoa-derived products, for example cocoa liquor and cocoa butter, a sweetener, and a dairy component, for example milk solids, as major components, these being in varying amounts which can readily be determined by the skilled person in accord with the type of chocolate being produced.

The dairy component is a major component in distinguishing milk chocolate from dark chocolate and another is, typically, the lesser amount of cocoa-derived products, compared with many dark chocolates.

The milk chocolate may comprise at least 10 wt% cocoa-derived products, suitably at least 15 wt%, for example at least 20 wt% cocoa-derived products.

The milk chocolate may comprise up to 40 wt% cocoa-derived products, suitably up to 35 wt%, for example up to 30 wt% cocoa-derived products.

Suitably the milk chocolate comprises at least 10 wt% milk solids, suitably at least 15 wt%, for example at least 20 wt% milk solids.

The milk chocolate may comprise up to 40 wt% milk solids, suitably up to 35 wt%, for example up to 30 wt% milk solids.

In some embodiments the chocolate may be a white chocolate. Suitably the white chocolate comprises cocoa butter, a sweetener, and a dairy component, for example milk solids, and substantially no cocoa solids.

The white chocolate may comprise at least 10 wt% cocoa butter, suitably at least 15 wt%, for example at least 20 wt% cocoa butter.

The white chocolate may comprise up to 40 wt% cocoa butter, suitably up to 35 wt%, for example up to 30 wt% cocoa butter.

Suitably the white chocolate comprises at least 10 wt% milk solids, suitably at least 15 wt%, for example at least 20 wt% milk solids.

The white chocolate may comprise up to 40 wt% milk solids, suitably up to 35 wt%, for example up to 30 wt% milk solids.

The chocolate may comprise at least one sweetener. The at least one sweetener may be a bulk sweetener or an intense sweetener. A mixture thereof may be provided. Suitable bulk sweeteners include sucrose, invert sugar syrup, caramel, glucose, fructose, polydextrose, high fructose corn syrup, honey, maple syrup, agave syrup, jam, marmalade and sugar alcohols, for example glycerol, maltitol, isomalt, sorbitol, xylitol, lactitol, erythritol, galactitol, polyglycitol and mannitol.

The chocolate may comprise at least 1 wt% of a bulk sweetener, suitably at least 10 wt%, for example at least 20 wt% of a bulk sweetener.

The chocolate may comprise up to 60 wt% of a bulk sweetener, suitably up to 50 wt%, for example up to 40 wt% of a bulk sweetener.

When more than one bulk sweetener is provided these definitions of proportion refer the summated amount of the bulk sweeteners (this principle applies to other components defined in this specification).

The chocolate may comprise at least one intense sweetener, for example to alter the flavour or reduce the calorie value of the edible material. Suitable intense sweeteners are selected from, for example, aspartame, saccharin, sucralose, acesulfame-K, stevia and neohesperidine. An intense sweetener may be present in an amount of from 0.01 to 2 wt%.

The chocolate may comprise a whey protein product. The whey protein product may be derived from cheese whey, casein whey or soy whey. Suitably the whey protein is derived from cheese whey. Cheese whey is the by-product of the acid or rennet coagulation of protein (casein) from milk.

Suitable forms of whey protein products include dried whey, delactosed whey, calcium treated delactosed whey, delactosed whey and demineralized whey. Demineralization of whey may be carried out using any known method. Suitable methods of demineralizing whey include electrodialysis, ion exchange, ultrafiltration and reverse osmosis.

In some embodiments the chocolate comprises a demineralized whey.

The chocolate may comprise a milk product and a whey protein product. The chocolate may comprise a whey protein product and no milk products. The whey protein product may partially or fully replace a milk product in a chocolate.

The chocolate may comprise at least 1 wt% of a whey protein product, suitably at least 2 wt%, for example at least 4 wt% of a whey protein product. The chocolate may comprise up to 10 wt% of a whey protein product, suitably up to 6 wt% of a whey protein product.

In this specification unless otherwise stated any particular component may comprise a mixture of such components, if appropriate. For example a mixture of two or more sweeteners may be present. In embodiments in which mixtures are present any amount of a component referred to herein refers to the total amount of such components present in the composition.

The chocolate may comprise an emulsifier.

Suitable emulsifiers include vegetable lecithins, synthetic phospholipids and polyglycerol polyricinoleate (PGPR). Suitable vegetable lecithins include soy lecithin, cottonseed lecithin, rice lecithin and peanut lecithin.

Chocolate, comprising particles of calcium lactate having particle diameter characteristics as set out herein, such as such as having a median particle diameter of less than 30 µm, for instance with a d₉₀ of 30 µm or less , may comprise at least 0.5 g of calcium lactate per 1 kg of chocolate, suitably at least 1 g of calcium lactate per 1 kg of chocolate, for example at least 1.5 g of calcium lactate per 1 kg of chocolate.

The chocolate, comprising particles of calcium lactate having particle diameter characteristics as set out herein, such as such as having a median particle diameter of less than 30 µm, for instance with a d₉₀ of 30 µm or less, may comprise up to 10 g of calcium lactate per 1 kg of chocolate, suitably up to 8 g of calcium lactate per 1 kg of chocolate, for example up to 6 g of calcium lactate per 1 kg of chocolate.

The chocolate, comprising particles of calcium lactate having particle diameter characteristics as set out herein, such as such as having a median particle diameter of less than 30 µm, for instance with a d₉₀ of 30 µm or less, may comprise from 0.5 g to 8 g of calcium lactate per 1 kg of chocolate, suitably from 1 g to 8 g of calcium lactate per 1 kg of chocolate, for example from 1 g to 6 g of calcium lactate per 1 kg of chocolate.

Suitably the confectionery product of the first aspect of the present invention is chocolate. Thus the present invention may provide chocolate comprising particles of calcium lactate, having a median particle diameter of less than 30µm.

In embodiments of the invention chocolate has an improved taste compared to a similar chocolate which does not comprise a calcium salt. For example the chocolate may have enhanced salty, nutty, fruity, minty, spicy, tangy, caramel, buttery or malty flavour, or any combination thereof.

In some embodiments chocolate of the present invention may have a similar taste to a conventional chocolate which does not comprise calcium lactate. The inventors have found that by adding calcium lactate having a median particle diameter of less than 30 µm, one or more steps in the chocolate making process which develop flavour in the chocolate can be modified. For example the conching step(s) may be shortened as less flavour development during conching is necessary to produce a chocolate with a taste comparable to a conventional chocolate. Modifying one or more of these steps which develop flavour may provide a cost saving in the chocolate making process.

In some embodiments chocolate of the present invention may have a similar taste to a conventional chocolate but a lower cocoa content. The inventors have found that by adding a calcium salt having a median particle diameter of less than 30 µm, the flavour provided by the cocoa-derived ingredients is enhanced and therefore less cocoa-derived ingredients are required in the production of a chocolate with a similar taste to a conventional chocolate. It will be appreciated that using lower amounts of cocoa-derived ingredients may provide a significant cost saving in the chocolate making process.

Suitably the calcium lactate is suspended within the fat phase of the chocolate. The fat phase of the chocolate may be a solid fat phase or a liquid fat phase. Suitably the fat phase of the chocolate is a solid fat phase.

Suitably the calcium lactate is added to a liquid chocolate mixture during preparation of the chocolate product.

The calcium lactate may be added to the fat component during preparation of a chocolate.

The calcium lactate may be added to a liquid chocolate mixture during preparation of a chocolate before the liquid chocolate mixture is tempered.

According to a second aspect of the present invention there is provided a method of preparing a chocolate having an improved flavour profile, the method comprising the steps of:
(a) mixing particles of calcium lactate having a median particle diameter of less than 30µm with a composition comprising a fat;
(b) mixing the composition comprising a fat with a sweetener, a cocoa-derived product, and optionally a milk product to form a chocolate mixture;
(c) tempering the chocolate mixture; and
wherein steps (a) and (b) are carried out in either order; wherein the method enhances the perception of any one or more of the following flavour characteristics: salty, tangy, spicy, herby, gingery, sweet, acidic, rich, cocoa, nutty, bitter, minty, vanilla, earthy, mushroom, umami, sour, fruity, smoky, savoury, caramel, buttery, creamy or malty.

The fat may comprise cocoa butter. Other suitable fats are as defined in relation the first aspect. The cocoa-derived product may comprise cocoa liquor, cocoa butter, low-fat cocoa solids or mixtures thereof. These are suitably as defined in relation to the first aspect.

Suitable sweeteners are as defined in relation to the first aspect.

Suitable milk products are as defined in relation to the first aspect.

In some embodiments the chocolate mixture comprises a fat, a sweetener and particles of calcium lactate.

In some embodiments the chocolate mixture comprises a fat, a sweetener, particles of calcium lactate and a cocoa-derived product.

In some embodiments the chocolate mixture comprises a fat, a sweetener, particles of calcium lactate and a milk product.

In some embodiments the chocolate mixture comprises a fat, a sweetener, particles of calcium lactate, a cocoa-derived product and a milk product.

Steps (a) and (b) may be carried out in either order.

Thus in some embodiments step (a) is carried out first and a composition comprising a fat is mixed with the calcium lactate and then added to the other ingredients.

In some embodiments step (b) is carried out first and a chocolate mixture comprising a fat is formed to which calcium lactate is then added.

Suitably the calcium lactate is added to a liquid composition.

In step (a) the calcium lactate may be added to the composition comprising a fat as a powder. Suitably the calcium lactate is mixed with the composition comprising a fat until it is dispersed in the composition. Suitably the calcium lactate may be mixed with the composition comprising a fat until it is coated by the composition.

Suitably the calcium lactate is suspended in the composition comprising a fat.

In step (b) a sweetener and cocoa-derived products and optionally milk products are added to the composition comprising a fat to provide a chocolate mixture. When step (a) is carried out after step (b) the calcium lactate is added to this chocolate mixture. Suitably the calcium lactate is suspended in the fat phase of the chocolate mixture.

Step (b) may involve conching the chocolate mixture. The skilled person would be aware of a variety of available conching methods and equipment.

In the method of the second aspect of the present invention a chocolate mixture is provided comprising a fat, a sweetener, a cocoa-derived product, and optionally a milk product. Other optional components may also be present, for example a whey protein, an emulsifier or a flavouring.

Suitable or optional features of the components of the chocolate mixture are as defined in relation to the first aspect.

Suitably the chocolate mixture is a liquid. The chocolate mixture may have a temperature above 20 °C. The chocolate mixture may be a liquid at a temperature of 45 °C and above. The chocolate mixture may solidify at a temperature below 25 °C.

The method of the present invention involves tempering the chocolate mixture. Tempering the chocolate mixture may cause the crystallization of at least a portion of the fat of the chocolate mixture. Tempering a chocolate typically involves heating the chocolate to approximately 45 °C to melt all of the crystal forms of the fat(s), cooling the chocolate to a temperature below the melting point of the most desirable crystal forms of the fat(s) to partially crystallize the fat(s), and re-heating the chocolate to a higher temperature below the melting point of the most desirable crystal forms of the fat(s) to melt any less desirable crystal forms of the fat(s). The tempered chocolate mixture may then be used in further processes to provide chocolate products and be ultimately cooled to ambient temperature. Cooling to ambient temperature may completely solidify the chocolate.

Suitably the tempered chocolate mixture is a liquid or a semi-solid. Suitably the tempered chocolate mixture comprises solidified fat, for example crystallized fat. Suitably the tempered chocolate mixture comprises desirable crystal forms of fat, for example the crystal forms which provide smoothness and a favourable mouthfeel to a chocolate product.

The tempered chocolate mixture may be cooled after step (ii) or step (c) to solidify into a chocolate.

In some embodiments the method of this second aspect provides a chocolate with an improved taste compared to a similar chocolate which does not comprise a calcium salt. For example the chocolate product may have enhanced salty, caramel, buttery or malty flavours or any combination thereof.

In some embodiments the method of this second aspect provides a chocolate with a similar taste to a conventional chocolate which does not comprise a calcium salt. The inventors have found that by providing a chocolate mixture comprising particles of calcium lactate which is subsequently tempered, one or more steps in the chocolate making process which develop flavour in the chocolate can be modified. For example the conching step(s) may be shortened as less flavour development during conching is necessary to produce a chocolate with a taste comparable to a conventional chocolate. Modifying one or more of these steps which develop flavour may provide a cost saving in the manufacture of the chocolate product.

In some embodiments the method of this second aspect provides a chocolate product with a similar taste to a conventional chocolate but a lower cocoa content. The inventors have found that by providing a chocolate mixture comprising particles of calcium lactate which is subsequently tempered, the flavour provided by the cocoa-derived ingredients is enhanced and therefore less cocoa-derived ingredients are required in the production of a chocolate with a similar taste to a conventional chocolate. It will be appreciated that using lower amounts of cocoa-derived ingredients may provide a significant cost saving in the manufacture of the chocolate.

The tempered chocolate mixture may be suitable for use in further processes to form chocolate products.

According to third aspect of the present invention there is provided a method of preparing a chocolate product, the method comprising the steps of:
(1) preparing a chocolate according to the method of the second aspect; and
(2) incorporating the chocolate into a chocolate product.

Suitable or optional features of the third aspect are as defined in relation to the first aspect.

The chocolate prepared in step (1) is suitably a tempered chocolate.

The chocolate prepared in step (1) may be a liquid chocolate.

In some embodiments the chocolate prepared in step (1) is a solid chocolate. The solid chocolate may be at least partially melted to provide a liquid chocolate before step (2)

In embodiments wherein the chocolate prepared in step (1) is a liquid chocolate, step (2) may involve allowing the chocolate to solidify.

Step (2) may involve adding further edible substances to the chocolate. The further edible substances may be provided in additional stages. Suitable further edible substances include nuts, nut pastes, chocolate, chocolate derivatives, fruit (including dried fruit pieces and fruit pastes), grains, biscuit ('cookie' in US terminology), cake, wafer, vegetables (including dried vegetable pieces and vegetable pastes), jam, marmalade, nougatine, truffle, frangipane, frosting, buttercream filling, cheese, cream or other soft cheese filling and caramel.

Step (2) may involve forming the chocolate into a chocolate product.

Suitable methods of forming the chocolate into the chocolate product include moulding, coating and depositing.

In some embodiments step (2) involves moulding the chocolate. Moulding may provide chocolate tablets, blocks or shells. The term tablet is known in the art to refer to a substantially flat piece of chocolate with portions, for example squares, defined by grooves in the chocolate. A chocolate shell is known in the art to refer to a moulded chocolate product with thin walls which define and partially enclose a cavity.

Suitably the liquid chocolate is poured into a mould and cooled to provide a solid chocolate. The solid chocolate may provide the chocolate product, for example in the form of a tablet or a block. The solid chocolate may be subjected to further processes to provide the chocolate product, for example by filling a chocolate shell with a further edible substance. Suitable further edible substances are described above.

In some embodiments step (2) involves using the liquid chocolate as a coating. Suitably the liquid chocolate is applied to an edible product and cooled to solidify the liquid chocolate. Suitable techniques for applying a chocolate coating to the edible product include dipping, spraying, enrobing, panning, in-moulding or topping. Suitable edible products for coating with chocolate include baked farinaceous products. Suitable baked farinaceous products include cake, biscuit, cookie, cracker, wafer, waffle, bread, doughnut, pudding and pastry.

The chocolate coating may partially cover the edible product. In alternative embodiments the chocolate coating may completely cover or enclose the edible product.

In some embodiments the chocolate may be used as a filling in an edible product, for example a confectionery product or a baked farinaceous product.

In some embodiments step (2) involves depositing the liquid chocolate. Suitably the liquid chocolate is deposited onto a surface and cooled to solidify. In some embodiments the liquid chocolate is formed into chocolate chips. The chocolate chips may be used in further processes to form a chocolate product. Suitably the chocolate chips are used as a topping or an inclusion in an edible product to provide the chocolate product. Suitable edible products are described above.

In some embodiments the method of the third aspect provides a chocolate product with an improved taste compared to a similar chocolate product which does not comprise calcium lactate. For example the chocolate product may have enhanced salty, caramel, buttery or malty flavours or any combination thereof.

In some embodiments the method of the third aspect provides a chocolate product with a similar taste to a conventional chocolate product which does not comprise calcium lactate. The inventors have found that by providing a chocolate mixture comprising particles of calcium lactate which is subsequently tempered, one or more steps in the chocolate making process which develop flavour in the chocolate can be modified. For example the conching step(s) may be shortened as less flavour development during conching is necessary to produce a chocolate with a taste comparable to a conventional chocolate. Modifying one or more of these steps which develop flavour may provide a cost saving in the manufacture of the chocolate product.

In some embodiments the method of the third aspect provides a chocolate product with a similar taste to a conventional chocolate but a lower cocoa content. The inventors have found that by providing a chocolate mixture comprising particles of calcium lactate which is subsequently tempered, the flavour provided by the cocoa-derived ingredients is enhanced and therefore less cocoa-derived ingredients are required in the production of a chocolate with a similar taste to a conventional chocolate. It will be appreciated that using lower amounts of cocoa-derived ingredients may provide a significant cost saving in the manufacture of the chocolate product.

The calcium lactate may enhance the flavours already present in the chocolate product. The calcium lactate may enhance the perception of any of the following flavour characteristics: salty, tangy, spicy, herby, gingery, sweet, acidic, rich, cocoa, nutty, bitter, minty, vanilla, earthy, mushroom, umami, sour, fruity, smoky, savoury, caramel, buttery, creamy or malty; or any combination thereof. Suitably the calcium lactate enhances salt flavour in the chocolate product.

The invention will now be further defined with reference to the following non-limiting examples.

### Example 1

A whey permeate chocolate, made to a standard milk chocolate recipe and further containing 11 wt% whey permeate (commercial source), was prepared in conventional manner.

### Example 2

The whey permeate chocolate prepared according to Example 1 was melted to form a liquid chocolate mixture. The liquid chocolate mixture was admixed with 2 g of calcium lactate per 1 kg of liquid chocolate. The calcium lactate was of 20 µm median particle diameter as determined using a Mastersizer 3000 laser diffraction powder analyzer available from Malvern Instruments.

### Example 3

The procedure of Example 2 was repeated using 4 g of calcium lactate per 1 kg of liquid chocolate.

### Example 4

A demineralised whey permeate chocolate, made to a standard milk chocolate recipe and further containing 11 wt% demineralised whey permeate (commercial source), was prepared in conventional manner. The calcium lactate was of 20 µm median particle diameter as determined using a Mastersizer 3000 laser diffraction powder analyzer available from Malvern Instruments.

### Example 5

The demineralised whey permeate chocolate prepared according to Example 4 was melted to form a liquid chocolate mixture.

### Example 6

The procedure of Example 5 was repeated using 4 g of calcium lactate per 1 kg of liquid chocolate.

### Example 7

Samples of chocolate prepared according to Examples 1 to 6 were evaluated by a panel of trained sensory assessors under confidential conditions and were assessed in triplicate for their aroma, appearance, texture, mouth feel, flavour and aftertaste. The vocabulary was generated by the panel during round table discussions.

The order of sample presentation was randomised across assessors. Results were collected via a Compusense data capture system (Compusense @Hand, Canada) and were analysed with QDATM software (Tragon) using analysis of variance (ANOVA). The Duncan minimum significant difference was calculated in order to determine for each attribute those samples which were significantly different within each subset (p<0.05).

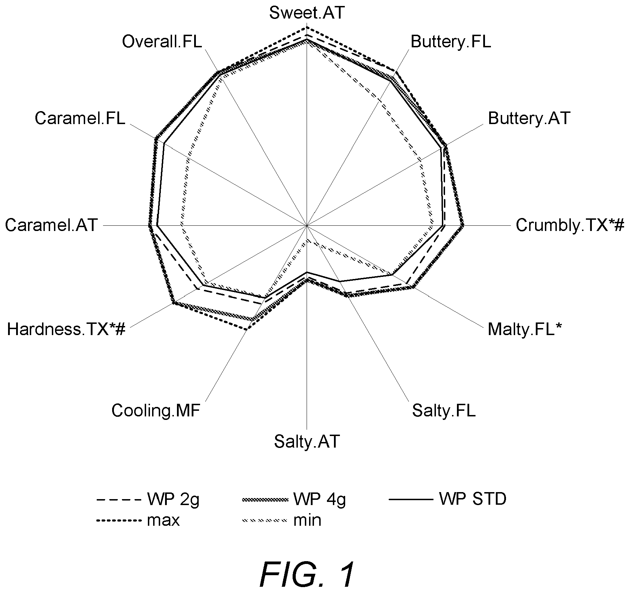

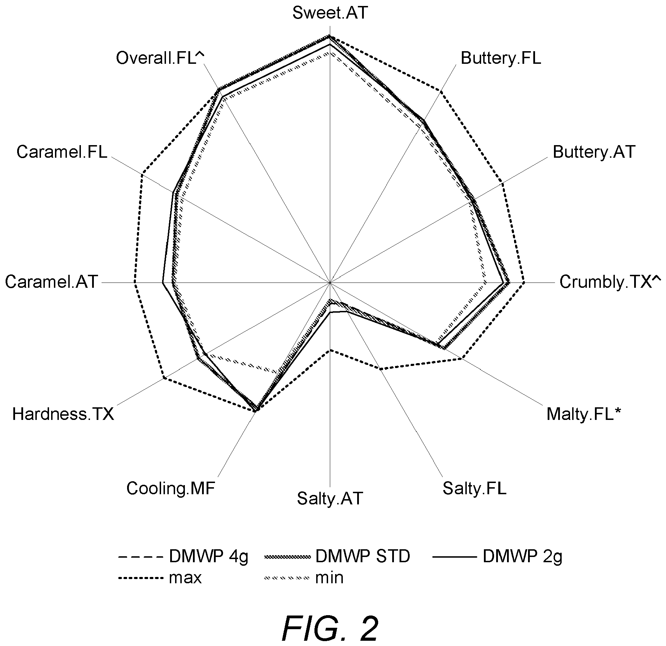

The results are displayed in Figures 1 and 2.

Figure 1 shows the comparison of the standard 11% whey permeate chocolate prepared according to Example 1 (WP Std) with the whey permeate chocolate comprising 2 g / kg of calcium lactate prepared according to Example 2 (WP 2g) and the whey permeate chocolate comprising 4 g / kg of calcium lactate prepared according to Example 3 (WP 4g). The different attributes presented are significantly different within the entire product set. The attributes are defined below in Tables 3 to 8.

The WP 4g chocolates were perceived to be harder in initial bite and more crumbly in texture than the WP 2g and WP Std chocolates. Furthermore, the WP 4g products were more intense in malty flavour (Malty.FL) than the WP Std products. Although salty flavour (Salty.FL), caramel flavour (Caramel.FL), and buttery flavour (Buttery.FL) were strongly correlated (r >0.96) in the course of this evaluation, no difference in the perception of salty flavour and salty aftertaste (Salty.AT) or caramel or buttery notes was detected between the whey permeate recipes in the course of this full evaluation.

Figure 2 shows the comparison of the standard 11% demineralised whey permeate chocolate prepared according to Example 4 (DMWP Std) with the whey permeate chocolate comprising 2 g / kg of calcium lactate prepared according to Example 5 (DMWP 2g) and the whey permeate chocolate comprising 4 g / kg of calcium lactate prepared according to Example 6 (WP 4g). The different attributes presented are significantly different within the entire product set. The attributes are defined below.

Two sensory differences across modalities were perceived by the descriptive panel when comparing the data between the DMWP 2g and DMWP 4g products against the DMWP Std. The DMWP 4g chocolates were perceived to be more crumbly in texture (Crumbly.TX) and stronger in overall flavour (Overall.FL) than the DMWP 2g chocolates. Overall flavour was not significantly correlated with any other flavour attributes in the course of this evaluation, thus it cannot be inferred which attribute the stronger overall flavour note would be associated with.

**Table 3 - Aroma**

| Aroma was evaluated by taking the lid off the pot, lifting the pot with the sample in it to the nose and smelling to evaluate: | |
|---|---|
| **Attribute** | **Definition** |
| OVERALL (weak-strong) | Measure of an overall aroma (of any kind) of the chocolate ranging from faint, light, mild or none to strong or rich. |
| COCOA (weak-strong) | Measure of pure raw cocoa powder aroma. |
| CREAMY (weak-strong) | Measure of a creamy aroma reminiscent of double cream on a scale of weak to strong. |
| BUTTERY (weak-strong) | Measure of fresh dairy butter aroma reminiscent of salted butter. |
| SWEET (weak-strong) | Measure of a sweet aroma similar to sugar; like table sugar. |
| CARAMEL (weak-strong) | Measure of a caramel aroma reminiscent of Cadbury's Caramel. |
| VANILLA (weak-strong) | Measure of a vanilla aroma reminiscent of a natural vanilla extract. |
| MALTY (weak-strong) | Measure of a malty aroma reminiscent of Horlicks. |
| BROWN FRUIT (weak-strong) | Measure of a mixed brown fruit aroma reminiscent of dried raisins, sultanas, prunes, and currents. |
| STALE (weak-strong) | Measure of stale aroma reminiscent of old chocolate from weak to strong. |
| SMOKY (weak-strong) | Measure of smoky aroma reminiscent of weak 'bonfire' from weak to strong. |
| SAVOURY | Measure of savoury aroma reminiscent of OXO (RTM) from weak to strong. |

**Table 4 - Appearance**

| Appearance was evaluated by removing the sample from the pot, placing it on the lid and moving the lid with the sample on it around in the light as needed to evaluate: | |
|---|---|
| **Attribute** | **Definition** |
| BROWN COLOUR (light-dark) | Measure of the intensity of the brown colour from a light milk chocolate or chocolate milk brown to a darker, more concentrated brown colour. |
| SHINY (dull-shiny) | Measure of how shiny the chocolate appears from a slightly shiny, dull, flat or matte chocolate to a shiny chocolate. |
| SMOOTH SURFACE (slightly-very) | The degree of how smooth the chocolate appears on the surface. |
| CHUNKY (thin-thick) | The thickness of the whole chunk. |

**Tables 5 - Texture/mouthfeel**

| Texture/mouthfeel was evaluated by taking a bite of the sample using front teeth in the middle of one square to evaluate: | |
|---|---|
| **Attribute** | **Definition** |
| HARDNESS (soft-hard) | Measure of how soft or hard the chocolate feels during the initial bite into the chocolate. |

| Continuing to chew the bite and evaluate: | |
|---|---|
| **Attribute** | **Definition** |
| CRUMBLY (slightly-very) | Degree that the chocolate breaks apart while chewing. |

| Continuing to chew and let melt to evaluate: | |
|---|---|
| **Attribute** | **Definition** |
| CHEWY (slightly-very) | Measure of how chewy the chocolate feels between the teeth and in the mouth. Chewy samples are reminiscent of the texture of a finger of fudge or Cadbury Caramel. |
| SMOOTH (slightly-very) | Measure of how smooth and velvety the chocolate feels as it is melting in the mouth. |
| POWDERY (slightly-very) | Measure of a powder perceived in the mouth similar to biting into icing sugar as the chocolate is melting in the mouth. |
| THICK (thin-thick) | Measure of how dense or viscous the chocolate feels in the mouth. |
| ADHESIVE (slightly-very) | Measure of how adhesive the chocolate feels; this can be measured by how much the chocolate sticks to your teeth. |
| COHESIVE (slightly-very) | Measure of how cohesive/compact the chocolate feels; this can be measured by how much the chocolate sticks to itself. |
| MOUTHCOATING (slightly-very) | Degree to which the chocolate coats the inner surface of the mouth. |
| MELT RATE (slow-fast) | Measure of the how slowly or quickly the chocolate melts in the mouth. |
| DRYING (slightly-very) | Measure of how much the chocolate dries the mouth and/or tongue; like you need to take a drink of water. |
| COOLING (slightly-very) | Measure of how much the chocolate cools your tongue and mouth. |

**Table 7 - Flavour**

| Flavour was evaluated by take a bite of the sample, chewing it and letting it melt as needed to evaluate: | |
|---|---|
| **Attribute** | **Definition** |
| OVERALL (weak-strong) | Measure of an overall flavour (of any kind) of the chocolate ranging from faint, light, mild or none to strong or rich. |
| COCOA (weak-strong) | Measure of pure raw cocoa powder flavour. |
| CREAMY (weak-strong) | Measure of a creamy flavour reminiscent of double cream on a scale of weak to strong. |
| BUTTERY (weak-strong) | Measure of fresh dairy butter flavour reminiscent of salted butter. |
| SWEET (weak-strong) | Measure of a sweet flavour similar to sugar; like table sugar. |
| CARAMEL (weak-strong) | Measure of a caramel flavour reminiscent of Cadbury's Caramel |
| VANILLA (weak-strong) | Measure of a vanilla flavour reminiscent of a natural vanilla extract. |
| MALTY (weak-strong) | Measure of a malty flavour reminiscent of Horlicks. |
| BROWN FRUIT (weak- strong) | Measure of a mixed brown fruit flavour reminiscent of dried raisins, sultanas, prunes, and currents. |
| ACIDIC (weak-strong) | Measure of acidic or tangy flavour. |
| SALTY (weak - strong) | Measure of the degree of saltiness of the chocolate from weak - strong. |
| SALIVATION AFTER FLAVOUR (slightly-very) | Measure of the amount of salivation or degree of mouth watering perceived after the flavour attributes. |

**Table 8 - Aftertaste/After Effect**

| Aftertaste/after effect was evaluated by taking a bite of the sample, chewing it, letting it melt and swallowing or spitting out the sample. When there was no sample left, waiting 30 seconds after tasting the sample to evaluate: | |
|---|---|
| **Attribute** | **Definition** |
| OVERALL (weak-strong) | Measure of an overall aftertaste remaining (of any kind) of the chocolate ranging from faint, light, mild or none to strong or rich. |
| COCOA (weak-strong) | Measure of pure raw cocoa powder aftertaste remaining. |
| CREAMY (weak-strong) | Measure of a creamy aftertaste remaining reminiscent of double cream on a scale of weak to strong. |
| BUTTERY (weak-strong) | Measure of fresh dairy butter aftertaste remaining reminiscent of salted butter. |
| SWEET (weak-strong) | Measure of a sweet aftertaste remaining similar to sugar; like table sugar. |
| CARAMEL (weak-strong) | Measure of a caramel aftertaste remaining reminiscent of Cadbury's Caramel |
| VANILLA (weak-strong) | Measure of a vanilla aftertaste remaining reminiscent of a natural vanilla extract. |
| MALTY (weak-strong) | Measure of a malty aftertaste remaining reminiscent of Horlicks. |
| BROWN FRUIT (weak- strong) | Measure of a mixed brown fruit aftertaste remaining reminiscent of dried raisins, sultanas, prunes, and currents. |
| ACIDIC (weak-strong) | Measure of acidic or tangy aftertaste remaining. |
| SALTY (weak - strong) | Measure of the degree of saltiness of the chocolate from weak - strong. |
| BITTER (weak - strong) | Measure of the amount of a basic bitter aftertaste remaining. |
| DRYING (slightly-very) | Measure of how dry the chocolate leaves the mouth and/or tongue; like you need to take a drink of water. |
| THROAT BURNING (slightly-very) | Measure of how an irritated or burning sensation is left in the back of the mouth/throat. |
| LINGERING (slightly-very) | Measure of how long ANY aftertaste or after effect lingers in the mouth. |

## Claims

1. Use of a calcium salt to improve the flavour profile of a confectionery product wherein the calcium salt has a median particle diameter of less than 30µm, the calcium salt is calcium lactate and the confectionery product comprises chocolate; wherein the use enhances the perception of any one or more of the following flavour characteristics: salty, tangy, spicy, herby, gingery, sweet, acidic, rich, cocoa, nutty, bitter, minty, vanilla, earthy, mushroom, umami, sour, fruity, smoky, savoury, caramel, buttery, creamy or malty.

2. Use of a calcium salt according to claim 1 to enhance the salt flavour of a reduced salt food product.

3. A method of preparing a chocolate having an improved flavour profile, the method comprising the steps of:
(a) mixing particles of calcium lactate having a median particle diameter of less than 30µm with a composition comprising a fat;
(b) mixing the composition comprising a fat with a sweetener, a cocoa-derived product, and optionally a milk product to form a chocolate mixture;
(c) tempering the chocolate mixture; and
wherein steps (a) and (b) are carried out in either order; wherein the method enhances the perception of any one or more of the following flavour characteristics: salty, tangy, spicy, herby, gingery, sweet, acidic, rich, cocoa, nutty, bitter, minty, vanilla, earthy, mushroom, umami, sour, fruity, smoky, savoury, caramel, buttery, creamy or malty.

4. A method of preparing a chocolate product, the method comprising the steps of:
(1) preparing a chocolate according to the method of claim 3; and
(2) incorporating the chocolate into a chocolate product.

## Patentansprüche

1. Verwendung eines Calciumsalzes zum Verbessern des Geschmacksprofils eines Süßwarenprodukts, wobei das Calciumsalz einen medianen Partikeldurchmesser von kleiner als 30 µm aufweist, das Calciumsalz Calciumlactat ist und das Süßwarenprodukt Schokolade umfasst; wobei die Verwendung die Wahrnehmung eines oder mehrerer der folgenden Geschmacksmerkmale verstärkt: salzig, scharf, würzig, kräuterartig, ingwerartig, süß, säurehaltig, reich, kakaoartig, nussig, bitter, minzig, vanilleartig, erdig, pilzartig, umami, sauer, fruchtig, rauchig, pikant, karamellartig, butterig, sahnig und malzig.

2. Verwendung eines Calciumsalzes gemäß Anspruch 1 zum Verstärken des Salzgeschmacks eines Lebensmittelprodukts mit verringertem Salzgehalt.

3. Verfahren zur Herstellung einer Schokolade mit einem verbesserten Geschmacksprofil, wobei das Verfahren die Schritte umfasst:
(a) Mischen von Partikeln von Calciumlactat mit einem medianen Partikeldurchmesser von kleiner als 30 µm mit einer Zusammensetzung, die ein Fett umfasst;
(b) Mischen der Zusammensetzung, die ein Fett umfasst, mit einem Süßstoff, einem aus Kakao abgeleiteten Produkt und gegebenenfalls einem Milchprodukt, um ein Schokoladengemisch zu bilden;
(c) Temperieren des Schokoladengemischs; und
wobei die Schritte (a) und (b) in beliebiger Reihenfolge durchgeführt werden; wobei das Verfahren die Wahrnehmung eines oder mehrerer der folgenden Geschmacksmerkmale verstärkt: salzig, scharf, würzig, kräuterartig, ingwerartig, süß, säurehaltig, reich, kakaoartig, nussig, bitter, minzig, vanilleartig, erdig, pilzartig, umami, sauer, fruchtig, rauchig, pikant, karamellartig, butterig, sahnig und malzig.

4. Verfahren zur Herstellung eines Schokoladeprodukts, wobei das Verfahren die Schritte umfasst:
(1) Herstellen einer Schokolade gemäß dem Verfahren von Anspruch 3; und
(2) Einverleiben der Schokolade in ein Schokoladeprodukt.

## Revendications

1. Utilisation d'un sel de calcium afin d'améliorer le profil aromatique d'un produit de confiserie, dans laquelle le sel de calcium possède un diamètre de particule médian inférieur à 30 µm, le sel de calcium est le lactate de calcium et le produit de confiserie comprend du chocolat ; où l'utilisation améliore la perception de l'une ou plusieurs quelconques parmi les caractéristiques d'arôme suivantes : salé, acidulé, épicé, herbacé, de gingembre, sucré, acide, riche, de cacao, de noisette, amer, de menthe, de vanille, terreux, de champignon, umami, aigre, fruité, fumé, de saveur salée, de caramel, de beurre, de crème ou de malt.

2. Utilisation d'un sel de calcium selon la revendication 1, destinée à améliorer l'arôme salé d'un produit alimentaire à teneur en sel réduite.

3. Méthode de préparation d'un chocolat ayant un profil aromatique amélioré, la méthode comprenant les étapes consistant à :
(a) mélanger des particules de lactate de calcium ayant un diamètre de particule médian inférieur à 30 µm avec une composition comprenant une matière grasse ;
(b) mélanger la composition comprenant une matière grasse avec un édulcorant, un produit dérivé de cacao, et éventuellement un produit laitier afin de former un mélange de chocolat ;
(c) tempérer le mélange de chocolat ; et
dans laquelle les étapes (a) et (b) sont effectuées dans un ordre ou un autre ; où la méthode améliore la perception de l'une ou plusieurs quelconques parmi les caractéristiques d'arôme suivantes : salé, acidulé, épicé, herbacé, de gingembre, sucré, acide, riche, de cacao, de noisette, amer, de menthe, de vanille, terreux, de champignon, umami, aigre, fruité, fumé, de saveur salée, de caramel, de beurre, de crème ou de malt.

4. Méthode de préparation d'un produit de chocolat, la méthode comprenant les étapes consistant à :
(1) préparer un chocolat selon la méthode selon la revendication 3 ; et
(2) incorporer le chocolat dans un produit de chocolat.
